# EUROPÄISCHE PATENTSCHRIFT

(11) **EP 0 550 857 B1**
(45) Veröffentlichungstag und Bekanntmachung des Hinweises auf die Patenterteilung: **11.09.1996**
(21) Anmeldenummer: 92121448.2
(22) Anmeldetag: 17.12.1992
(51) Int. Cl.: B22F 9/24, B01J 23/94

(54) **Verfahren zur Herstellung von Kupferpulver**
Process for preparing copper powder
Procédé pour la préparation de poudre de cuivre

(30) Priorität: 20.12.1991 DE 4142432
(43) Veröffentlichungstag der Anmeldung: 14.07.1993
(73) Patentinhaber: WACKER-CHEMIE GMBH, D-81737 München (DE)
(72) Erfinder: Streckel, Willi, W-8261 Mehring/Öd (DE); Straussberger, Herbert, W-8261 Mehring/Öd (DE); Pachaly, Bernd, Dr., W-8263 Burghausen (DE)

(56) Entgegenhaltungen:
- EP-A- 0 057 383
- EP-A- 0 344 324
- FR-A- 2 055 966
- US-A- 4 758 352

## Beschreibung

Die Erfindung bezieht sich auf ein Verfahren zur Herstellung von Kupferpulver aus Kupferlösungen durch inverse Zementation mit Eisenpulver.

Der bei der Methylchlorsilan-Synthese aus Methylchlorid und Silicium benötigte Kupferkatalysator wird in Form von metallischem Kupfer, wie Zementkupfer, Elektrolytkupfer oder durch pyrometallurgische Verfahren aus Zementkupfer hergestelltem oxidischem Kupfer oder Kupferverbindungen, wie Kupferoxiden, Kupferhydroxiden oder anderen Kupfersalzen, oder als Legierungsbestandteil des Siliciums eingesetzt. Die Kupferkatalysatoren enthalten zur Verbesserung der Aktivität, Stabilität und Reaktivität Metalle als Aktivatoren, wie Aluminium oder Zink oder als Promotoren, wie Zinn, Antimon oder Arsen.

Bei der Durchführung der Direktsynthese in Wirbelschichtreaktoren werden zusammen mit dem Reaktionsprodukt, dem Rohsilangemisch, und unumgesetztem Methylchlorid auch Feinanteile von Silicium und Kupferkatalysator, verunreinigt mit Kohlenstoffpartikeln und verschiedenen Metallverbindungen aus Nebenbestandteilen des technischen Silicium-Rohstoffes, ausgetragen und in nachgeschalteten Trennaggregaten, z.B. Zyklonen, abgetrennt.

Weiterhin fällt ein Reaktorrückstand aus Silicium, Katalysator und Metallhalogeniden aus Nebenbestandteilen des technischen Silicium-Rohstoffes und Kohlenstoffpartikeln an, der kontinuierlich oder diskontinuierlich aus den Wirbelschichtreaktoren ausgetragen wird. Auch Trocknungs- und Filtrationsprozesse führen zum Anfall verunreinigter Feinststäube.

Bislang sind nur Rückgewinnungsverfahren für Kupfer aus Prozeßrückständen bekannt, bei denen verunreinigte Kupfersalze gewonnen werden, die der Katalysatorherstellung erst nach aufwendiger Reinigung zugeführt werden können.

In der US-A-4,758,352 (K. Feldner und O. Horak, ausgegeben am 19.07.1988 für Bayer AG, Leverkusen) ist ein Verfahren zur Behandlung von hochsiedenden Rückständen aus der Methylchlorsilansynthese beschrieben, bei dem die Rückstände mit Wasser oder verdünnter Salzsäure hydrolysiert und mit Sauerstoff oxidiert werden. Die abgetrennte CuCl₂-enthaltende Lösung wird mit NaOH und SO₂ behandelt, wobei Kupfer(I)oxid ausfällt.

Dieses Kupfer(I)oxid muß auf bekannte Weise, wie Lösen in verdünnter Schwefelsäure unter Luftzufuhr und anschließendem Zementieren mit Eisenschrott, aufgearbeitet werden. Meistens ist eine weitere Reinigung des erhaltenen Kupfers durch Raffinationsschmelzen und danach auf elektrolytischem Wege erforderlich, wenn daraus wieder Katalysator für die Methylchlorsilansynthese hergestellt werden soll.

Kupfer ist duktil und mechanisch nicht zu einem Pulver mit geeigneter Korngröße und Oberfläche zerkleinerbar. Wenn ein Kupferpulver hergestellt werden soll, das zu einem pulverförmigen Katalysator für die Methylchlorsilansynthese beispielsweise durch Oxidieren oder Dotieren der Kupferoberfläche weiterverarbeitet wird, muß das Kupferpulver durch besondere Verfahren, wie Zersprühen, aus der Schmelze hergestellt werden.

Es bestand die Aufgabe, ein einfaches Verfahren zur Herstellung von Kupferpulver, das zu Katalysatoren für die Methylchlorsilan-Synthese verarbeitet werden kann, bereitzustellen, wobei die bei der Aufarbeitung von Prozeßrückständen der Methylchlorsilan-Synthese anfallenden Kupfersalzlösungen eingesetzt werden können.

Die Erfindung betrifft ein Verfahren zur Herstellung von feinteiligem zur Herstellung von Kupferkatalysator für die Methylchlorsilan-Synthese geeignetem Kupferpulver, wobei wäßrige Kupfersalzlösung aus Prozeßrückständen der Methylchlorsilan-Synthese mit Mineralsäure, gegebenenfalls unter Zusatz von Oxidationsmitteln, gewonnen wird,
die Kupfersalzlösung mit einem synthetischen nicht ionogenen oder kationischen Flockungsmittel versetzt und anschließend filtriert wird
und die Kupfersalzlösung in eine wäßrige Suspension von Eisenpulver eingebracht wird.

Die Abscheidung eines Metalls aus einer Lösung durch Zusatz eines unedleren Metalls, das in der elektrochemischen Spannungsreihe vor dem auszufällenden Metall steht und anstelle des edleren Metalls in Lösung geht, wird als Zementation des edleren Metalls bezeichnet. Üblicherweise wird Kupfer durch Zugabe von Eisenpulver in eine Kupfersalzlösung zementiert. Bei der vorliegenden Erfindung wird das Kupferpulver über eine inverse Zementation hergestellt.

Die Konzentration der Kupfersalzlösung liegt vorzugsweise bei mindestens 0,2 Gew.-% bis zur Sättigung. Die Kupfersalzlösung wird vorzugsweise kontinuierlich zugegeben, damit die Kupferionenkonzentration gleich bleibt und nicht zu hoch wird. Heftiges Vermischen ist ebenfalls vorteilhaft.

Das erfindungsgemäß hergestellte Kupferpulver kann nach Waschen und Trocknen partiell oxidiert werden und gegebenenfalls nach Dotierung mit Aktivatoren oder Promotoren als hochaktiver Katalysator in der Direktsynthese von Methylchlorsilanen eingesetzt werden. Die notwendige Feinteiligkeit des Kupfers wird nicht durch physikalische oder mechanische Verfahren sondern durch das erfindungsgemäße Verfahren erreicht. Lediglich eine desagglomerierende Behandlung in einer Mühle kann gegebenenfalls erforderlich sein.

Das erfindungsgemäß hergestellte Kupferpulver ist aufgrund seines geringen Anteils an störenden Verunreinigungen, wie Blei, Zink, Zinn und Titan, auch sehr gut zur Verarbeitung zu Kupferkatalysatoren aus Kupfersalzen oder zum Legieren des in der Methylchlorsilan-Synthese verwendeten Siliciums geeignet.

Das im erfindungsgemäßen Verfahren benötigte Eisen muß in Pulverform vorliegen, da eine hohe Reaktionsgeschwindigkeit zur Bildung des feinteiligen Kupfers notwendig ist. Besonders gute Ergebnisse werden erzielt, wenn die mittlere Teilchengröße des Eisenpulvers 0,1 bis 100 µm beträgt. Die Verwendung von Schwammeisen, das durch Reduktion von Eisenoxid in festem Zustand gewonnen wird und besonders porös anfällt, ist bevorzugt.

Der pH-Wert in der wäßrigen Suspension von Eisenpulver liegt vorzugsweise unter 3, damit keine Eisenhydroxidfällungen das Kupferpulver verunreinigen. Bei zu kleinem pH-Wert wird das Eisenpulver zu schnell gelöst.

Die besten Ergebnisse erhält man, wenn der pH-Wert der Suspension 0,5 bis 2,5 beträgt.

Das erfindungsgemäße Verfahren ist im gesamten Temperaturbereich durchführbar, in dem die wäßrige Suspension bei entsprechendem Druck herstellbar ist. Die Qualität des Kupferpulvers ist jedoch am besten zu steuern, wenn die Temperatur der Suspension 10 bis 90°C beträgt.

Durch Einhalten der bevorzugten Bereiche der Teilchengröße des Eisenpulvers, von pH-Wert und Temperatur und durch gleichmäßige Zugabe der Kupfersalzlösung kann die mittlere Teilchengröße des Kupferpulvers in dem bevorzugten Bereich von 0,5 bis 50 µm gehalten werden. Dies ist bereits die optimale Teilchengröße für einen pulverförmigen Kupferkatalysator für die Methylchlorsilan-Synthese.

Bei dem erfindungsgemäßen Verfahren können zusätzlich Kupfersalzlösungen verschiedenartigen Ursprungs eingesetzt werden. Beispielsweise eignen sich Kupfer(II)chlorid-Ätzlösung aus der Leiterplattenherstellung oder durch Mineralsäuren gelöste Elektrokupferabfälle.

Bei der Gewinnung der Kupfersalzlösung aus Prozeßrückständen der Methylchlorsilan-Synthese arbeitet man die Prozeßrückstände mit Mineralsäure, gegebenenfalls unter Zusatz von Oxidationsmitteln, auf, beispielsweise wie in der US-A-4,758,352 beschrieben. Es handelt sich insbesondere um feste Rückstände, die vorzugsweise unter 1 Gew.-% Silane enthalten. Vorzugsweise werden die Prozeßrückstände mit Wasser suspendiert, wobei sich verdünnte Salzsäure bildet. Dann wird eine Mineralsäure, wie Salzsäure, Salpetersäure oder Schwefelsäure, zugesetzt, wobei im Falle von Salzsäure und Schwefelsäure die Anwesenheit eines Oxidationsmittels, wie Sauerstoff, Chlor, NaOCl oder H₂O₂, erforderlich ist.

Dabei gehen alle üblicherweise in Prozeßrückständen der Methylchlorsilan-Synthese vorkommenden Metalle in Lösung; Silicium und Kohlenstoff bleiben ungelöst.

Besonders bevorzugt ist die Gewinnung von Kupfer(II)chlorid mit Salzsäure und Sauerstoff, der als Luftsauerstoff oder als reines Gas eingeblasen werden kann.

Zur Abtrennung von unlöslichen Begleitstoffen, wie feine Kohlenstoffpartikel, wird die Kupfersalzlösung vor dem Einbringen in die wässrige Suspension von Eisenpulver mit einem Flockungsmittel versetzt und anschließend filtriert.

Der Filterrückstand muß weitgehend frei von eluierbaren toxischen Metallverbindungen sein, um ordnungsgemäß deponiert oder beispielsweise als Rohstoff für Hochtemperaturkeramik oder nach Oxidation als Zuschlagstoff für mineralische Baustoffe verwendet werden zu können. Die eluierbaren Bestandteile des Filterrückstands können durch eine Wäsche mit Phosphorsäure oder einer basischen wässrigen Lösung minimal gehalten werden. Als Basen werden bevorzugt NaOH, KOH und Ca(OH)₂, insbesondere NaOH, eingesetzt. Die mit einer basischen wäßrigen Lösung behandelten Filterrückstände entsprechen den gesetzlichen Bestimmungen der TA-Abfall in Bezug auf deren Elutionswerte von Kupfer und Zink.

Das Filtrat der inversen Zementation ist eine vorwiegend Eisensalz enthaltende Lösung, die weiter verwendet werden kann. Wenn das Filtrat aus Eisenchloridlösung besteht, kann diese beispielsweise als Flockungsmittel in Abwasseraufbereitungsanlagen eingesetzt werden.

Bei der Methylchlorsilan-Synthese kann durch die Anwendung des erfindungsgemäßen Verfahrens fast das ganze als Katalysator eingesetzte Kupfer zurückgewonnen werden, so daß ein weitgehend geschlossener Kupferkreislauf möglich wird. Geringe bei der Methylchlorsilan-Synthese unvermeidliche Kupferverluste können dadurch leicht ausgeglichen werden, daß man zu der vorstehend beschriebenen wäßrigen Suspension der Prozeßrückstände kupferhaltige wäßrige Lösungen zusetzt, wie die vorstehend erwähnten Abfallprodukte technischer Prozesse.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20°C .

### Beispiele

### Beispiel 1:

### Suspendierung der Prozeßrückstände der Methylchlorsilansynthese

500 g eines Gemisches aus Reaktorrückstand, Zyklonstaub und Trocknerstaub aus der Rohsilan-Filtration wurden unter Rühren in 1000 ml Wasser eingebracht. Dieser Suspendierungsvorgang wurde unter Inertgas, z.B. Stickstoff, durchgeführt, da die Prozeßrückstände pyrophor sein können.

Die elementare Zusammensetzung dieses Prozeßrückstandes war:
- 17,0 %: Kupfer
- 4,2 %: Eisen
- 1,0 %: Zink
- 1,7 %: Aluminium
- 0,9 %: Calcium
- 0,4 %: Titan
- Rest:: Silicium, Kohlenwasserstoff, Sauerstoff

### Beispiel 2:

### Lösen der Prozeßrückstände

In die nach Beispiel 1 erzeugte Feststoff-Suspension wurden unter Rühren über eine Keramik-Fritte 300 l/h Luft eingeblasen. Durch kontinuierliche Zugabe von 20 %iger Salzsäure wurde der pH-Wert bei 1,5 gehalten. Innerhalb von 8 h stieg der Kupfergehalt der Lösung auf 57 g/l an, dafür wurden 475 g Salzsäure verbraucht. Der Kupfergehalt des nicht gelösten Feststoffanteils lag unter 0,5 %.

### Beispiel 3:

### Flockung der feststoffhaltigen Lösung

Die nach Beispiel 2 erhaltene Lösung enthielt ungelöst feinteilige Silicium- und Kohlenstoff-Partikel. Eine Filtration war nur nach Flockung möglich. Dazu wurden unter Rühren 0,5 % einer 0,1 %igen Lösung eines kationischen Flockungsmittels (Sedipur CF 302 der Firma BASF) zugesetzt.

In wenigen Sekunden agglomerierte der Feststoffanteil und konnte problemlos abfiltriert werden.

### Beispiel 4:

### Filtration der geflockten, feststoffhaltigen Lösung

Eine nach Beispiel 3 erhaltene Lösung wurde filtriert, wobei der Filterrückstand in der Form erhalten werden mußte, daß dessen Eluatwerte den gesetzlichen Bestimmungen der TA-Abfall in bezug auf Kupfer und Zink entsprachen. Dazu werden 5 l der feststoffhaltigen Lösung über eine Hoesch-Filterpresse Typ MF62 gegeben. Nach dem Abziehen des Filtrats wurde mit 6 l Wasser nachgewaschen, trockengeblasen und eine Wäsche mit 5 l Natronlauge mit pH-Wert 12 angeschlossen. Der nach Abpressen erhaltene Filterrückstand wies eine Restfeuchte von 30 % auf. Ein Eluierungsversuch nach DIN 38414 ergab im Eluat pH 8,1, 0,05 mg/l Kupfer (Grenzwert TA-Abfall 10 mg/l) und 0,05 mg/l Zink.

### Beispiel 5:

### Inverse Kupfer-Zementation und Katalvsator-Herstellung

In ein Rührgefäß wurden 500 ml Wasser und 61 g Schwammeisenpulver mit einer mittleren Teilchengröße von 60 bis 70 µm vorgelegt. Innerhalb von 30 Minuten wurden 1,5 l einer nach Beispiel 4 erzeugten Kupfer(II)chloridlösung zugesetzt (Kupfergehalt nur 45 g/l). Anschließend wurde 15 Minuten nachgerührt. Die Abtrennung des Zementkupfers von der Eisenchlorid-Lösung erfolgte über eine Nutsche. Nach Waschen mit 2 l Wasser und Trockensaugen erfolgte die Trocknung und Oxidation des Kupferpulvers bei 170°C über 3 Stunden in einem Umluft-Trockenschrank. Das getrocknete Material wurde in einer Luftstrahlmühle desagglomeriert und von Anteilen über 25 µm durch Sichtung getrennt. Nach Dotierung war der erhaltene Kupferkatalysator für die Methylchlorsilan-Synthese wieder einsetzbar. Ausbeute an Kupfer 99 %.

### Beispiel 6:

### Methylchlorsilan-Synthese mit Kupferkatalysator

In einem Labor-Wirbelschichtreaktor mit Heizwicklung, Gasverteilungsfritte, Destillationsbrücke mit Sole-Kühlung und Vorlagekolben wurden 120 g Siliciumpulver der Korngröße 70 - 250 µm vermischt mit einem Katalysatorgemisch aus 6 g des in Beispiel 5 hergestellten Kupferkatalysators, 2 g Zinkchlorid und 6 mg Zinnpulver vorgelegt. Nach Aufheizen auf 350°C wurden 40 l/h Methylchlorid eingeleitet. Nach 15 Minuten Induktionszeit begann die Bildung von Methylchlorsilanen. Nach weiteren 107 Minuten waren im Vorlagekolben 87 g Methylchlorsilan vorhanden. Die GC-Analyse des Reaktionsproduktes ergab 80,6 % Me₂SiCl₂; 6,5 % MeSiCl₃; 1,8 % Me₃SiCl, 8,5 % Hochsieder und 2,6 % Leichtsieder.

## Patentansprüche

1. Verfahren zur Herstellung von feinteiligem zur Herstellung von Kupferkatalysator für die Methylchlorsilan-Synthese geeignetem Kupferpulver, wobei wäßrige Kupfersalzlösung aus Prozeßrückständen der Methylchlorsilan-Synthese mit Mineralsäure, gegebenenfalls unter Zusatz von Oxidationsmitteln, gewonnen wird,
die Kupfersalzlösung mit einem synthetischen nicht ionogenen oder kationischen Flockungsmittel versetzt und anschließend filtriert wird
und die Kupfersalzlösung in eine wäßrige Suspension von Eisenpulver eingebracht wird.

2. Verfahren nach Anspruch 1, wobei die mittlere Teilchengröße des Eisenpulvers 0,1 bis 100 µm beträgt.

3. Verfahren nach einem der vorangehenden Ansprüche, wobei der pH-Wert der Suspension 0,5 bis 2,5 beträgt.

4. Verfahren nach einem der vorangehenden Ansprüche, wobei die Temperatur der Suspension 10 bis 90°C beträgt.

5. Verfahren nach einem der vorangehenden Ansprüche, wobei die mittlere Teilchengröße des Kupferpulvers 0,5 bis 50 µm beträgt.

6. Verfahren nach einem der vorangehenden Ansprüche, wobei Kupfer(II)chlorid mit Salzsäure und Sauerstoff gewonnen wird.

7. Verfahren nach Anspruch 6, wobei der Filterrückstand mit einer basischen wässrigen Lösung gewaschen wird.

## Claims

1. Process for the preparation of finely divided copper powder suitable for the preparation of copper catalyst for the synthesis of methylchlorosilane, in which aqueous copper salt solution is obtained from process residues from the synthesis of methylchlorosilane with mineral acid, if appropriate with the addition of oxidizing agents,
the copper salt solution is treated with a synthetic non-ionic or cationic flocculating agent and then filtered and the copper salt solution is incorporated into an aqueous suspension of iron powder.

2. Process according to Claim 1, in which the average particle size of the iron powder is 0.1 to 100 µm.

3. Process according to one of the preceding claims, in which the pH of the suspension is 0.5 to 2.5.

4. Process according to one of the preceding claims, in which the temperature of the suspension is 10 to 90°C.

5. Process according to one of the preceding claims, in which the average particle size of the copper powder is 0.5 to 50 µm.

6. Process according to one of the preceding claims, in which copper(II) chloride is obtained using hydrochloric acid and water.

7. Process according to Claim 6, in which the filter residue is washed with a basic aqueous solution.

## Revendications

1. Procédé pour la préparation de poudre de cuivre finement divisée, appropriée à la préparation de catalyseurs au cuivre pour la synthèse du méthylchlorosilane, caractérisé en ce que l'on extrait une solution aqueuse de sels de cuivre à partir de résidus de procédé de la synthèse du méthylchlorosilane à l'aide d'acides minéraux, le cas échéant avec l'addition d'agents oxydants, en ce que l'on fait réagir la solution de cuivre avec un agent floculant synthétique, non ionogène ou cationique, et en ce que l'on procède ensuite à une filtration, et en ce que l'on introduit la solution de cuivre dans une suspension aqueuse de poudre de fer.

2. Procédé selon la revendication 1, caractérisé en ce que la grosseur moyenne de particule de la poudre de fer est de 0,1 à 100 microns.

3. Procédé selon l'une quelconque des revendications précédentes, caractérisé en ce que la valeur pH de la suspension est de 0,5 à 2,5.

4. Procédé selon l'une quelconque des revendications précédentes, caractérisé en ce que la température de la suspension est de 10 à 90°C.

5. Procédé selon l'une quelconque des revendications précédentes, caractérisé en ce que la grosseur moyenne de particule de la poudre de cuivre est de 0,5 à 50 microns.

6. Procédé selon l'une quelconque des revendications précédentes, caractérisé en ce que l'on extrait le chlorure de cuivre (II) à l'aide d'acide chlorhydrique et d'oxygène.

7. Procédé selon la revendication 6, caractérisé en ce que l'on lave le résidu de filtre à l'aide d'une solution aqueuse basique.
